# EUROPEAN PATENT SPECIFICATION

(11) **EP 4 273 992 B1**
(45) Date of publication and mention of the grant of the patent: **03.12.2025**
(21) Application number: 22893062.4
(22) Date of filing: 21.10.2022
(51) Int. Cl.: H01M 10/0567, H01M 10/052, H01M 10/42, H01M 4/36, H01M 4/133, H01M 4/525, H01M 4/38, H01M 4/505

(54) **LITHIUM SECONDARY BATTERY HAVING ENHANCED HIGH-TEMPERATURE SAFETY**
LITHIUM-SEKUNDÄRBATTERIE MIT ERHÖHTER HOCHTEMPERATURSICHERHEIT
BATTERIE SECONDAIRE AU LITHIUM À SÉCURITÉ ÉLEVÉE À HAUTE TEMPÉRATURE

(30) Priority: 12.11.2021 KR 20210155462
(43) Date of publication of application: 08.11.2023
(73) Proprietor: LG Energy Solution, Ltd., Seoul 07335 (KR)
(72) Inventor: LEE, Won Tae, Daejeon 34122 (KR); AHN, Kyoung Ho, Daejeon 34122 (KR); LEE, Chul Haeng, Daejeon 34122 (KR); HAN, Jun Hyeok, Daejeon 34122 (KR); SHIN, Won Kyung, Daejeon 34122 (KR); JI, Su Hyeon, Daejeon 34122 (KR); OH, Young Ho, Daejeon 34122 (KR)
(74) Representative: Hoffmann Eitle
(86) International application number: PCT/KR2022/016121
(87) International publication number: WO 2023/085639

(56) References cited:
- CN-A- 103 066 324
- JP-A- 2012 084 384
- JP-A- 2020 187 973
- KR-A- 20140 089 112
- KR-A- 20150 143 295
- KR-A- 20200 029 484

## Description

### [Technical Field]

The present invention relates to a lithium secondary battery with improved high temperature safety. This application claims priority from Korean Patent Application No. 10-2021-0155462, filed on November12, 2021.

### [Background Technology of the Invention]

Recently, secondary batteries are widely applied not only to small devices such as portable electronic devices, but also to medium and large devices such as battery packs or power storage devices of hybrid or electric cars. Examples of these secondary batteries may include non-aqueous electrolyte batteries such as lithium-ion batteries, lithium batteries, lithium-ion capacitors, and sodium ion batteries.

For example, in general, LiPF₆, which is the most widely used lithium salt for an electrolyte, reacts with an electrolyte solvent to promote the depletion of the solvent and generates HF. The HF generated thereby may not only generate a large amount of gas under high temperature conditions, but also elute metal ions from a positive electrode active material, and when the eluted metal ions are generated in the form of a precipitate on the surface of a negative electrode, it causes an increase in negative electrode potential and a drop in cell OCV, leading to problems such as degraded battery performance as well as a reduction in the lifespan and high-temperature safety.

Lithium metal oxide is used as positive electrode active material for lithium secondary battery, and lithium metal, lithium alloy, crystalline, amorphous carbon or carbon complex are used as negative electrode active material for lithium secondary battery. The active material is either coated onto a current collector with appropriate thickness and length, or apply the active material itself in a film shape and wind together with a membrane serving as an insulator or layer it into an electrode array, put it into a can or a container, and infuse electrolyte to manufacture a secondary battery.

The lithium secondary batteries get charged and discharged when lithium ion from positive electrode's lithium metal oxide repeatedly gets intercalated and deintercalated into negative electrode's graphite electrode. In this case, lithium gets highly reactive, thus creating a coating film on the surface of a negative electrode by reacting with a carbon electrode and forming Li₂CO₃, LiO, LiOH, etc. Such membrane is called a Solid Electrolyte Interface (SEI), and the SEI coating film formed in the early stage of charging prevents lithium ions from reacting with carbon's negative electrode or other materials during charge-discharge. In addition, it only passes through lithium ions by acting as an Ion Tunnel. The Ion Tunnel prevents the structure of carbon negative electrode from collapsing due to larger organic solvents in the electrolyte getting co-intercalated with carbon negative electrode by solvating lithium ions.

Therefore, in order to improve the lithium secondary battery's characteristic of high-temperature cycle, there must be a firm SEI coating film on the lithium secondary battery's negative electrode. Once the SEI coating film gets formed in the early stage of charging, during the repeated charging and discharging, it prevents lithium ions from reacting with carbon's negative electrode or other materials, and acts as an Ion Tunnel between the electrolyte and negative electrode by only passing through lithium ions.

Conventionally, in the case of an electrolyte without an electrolyte additive or including an electrolyte additive having poor properties, the formation of uneven SEI coating film made it difficult to expect an improvement in output characteristics. Moreover, even when the electrolyte additive is included, in the case where the input amount cannot be adjusted to the required amount, when there is a high-temperature reaction due to the electrolyte additive, the surface of a positive electrode is decomposed or the electrolyte generates an oxidative reaction, thereby increasing the secondary battery's irreversible capacity and reducing output characteristics.

Therefore, there is currently a need for a development in a compound that can be used as an electrolyte additive for the improvement in overall battery performance such as high-rate charge-discharge characteristics, high-temperature performance characteristics, and lifespan characteristics by forming a firm SEI membrane on the negative electrode.

CN 103066324 describes a lithium ion battery electrolyte, the raw material composition and mass parts of which are: 60 to 85 parts of ionic liquid, 10 to 50 parts of carbonate solvents, and 0 to 10 parts of phosphate flame retardants; lithium in the electrolyte. The concentration of salt is 0.1mol / L ~ 1.5mol / L.

JP2012084384 describes a non-aqueous electrolyte solution comprising an electrolyte and a non-aqueous solvent capable of dissolving the electrolyte, the non-aqueous electrolyte solution comprising a phosphate ester compound.

### [Description of the Invention]

### [Technical Problem]

The present invention is directed to providing an electrolyte composition that can improve high-temperature storage characteristics, high-temperature capacity, and the lifespan characteristics, and enhance lithium secondary battery's high-rate charge-discharge characteristics by forming a coating film on the electrode surface, especially on the negative electrode.

### [Technical Solution]

In order to solve the above-mentioned problem, according to an exemplary embodiment of the present disclosure,
an electrolyte composition that comprises a non-aqueous organic solvent, a lithium salt, a primary additive which comprises a compound represented by the following Formula 1; and a secondary additive comprising a non-fluorine-based secondary additive including vinylene carbonate (VC) and/or vinyl ethylene carbonate (VEC), and a fluorine-based secondary additive including fluoroethylene carbonate (FEC):

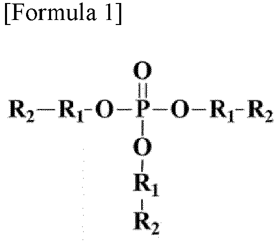

In the Formula 1,
R₁ is each independently a single bond, an alkylene group having 1 to 10 carbon atoms, or 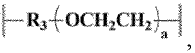
R₂ is each independently an acrylate group, or a methacrylate group,
R₃ is an alkylene group having 1 to 4 carbon atoms, and
a is an integer of 1 to 10.

Specifically, R₁is each independently a single bond, a methylene group, an ethylene group, a propylene group, a propylene group, or 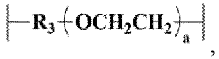
R₃is an ethylene group, and
a is an integer of 1 to 5.

For example, the compound represented by the Formula1 includes any one or more of the compounds of Structural Formula 1 to Structural Formula 6 below:

| | | |
|---|---|---|
| Structural Formula 1 | Structural Formula 2 | Structural Formula 3 |
| 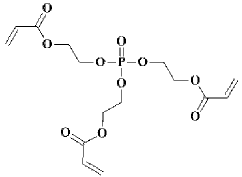 | 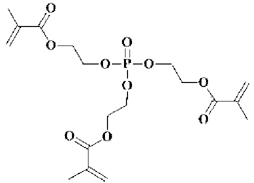 | 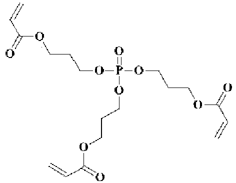 |
| Structural Formula 4 | Structural Formula 5 | Structural Formula 6 |
| 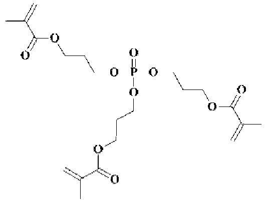 | 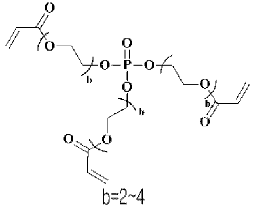 | 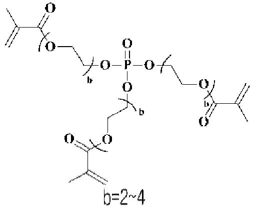 |
| Structural Formula 7 | Structural Formula 8 | |
| 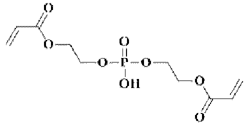 | 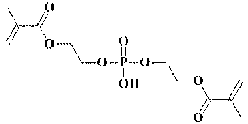 | |

In addition, the primary additive is comprised at 0.01 to 5 wt% with respect to the total weight of the electrolyte composition.

Moreover, the secondary additive is comprised at 0.001 to 5 wt% with respect to the total weight of the electrolyte composition.

In addition, the lithium salt comprises one or more selected from the group consisting of LiCl, LiBr, LiI, LiClO₄, LiBF₄, LiB₁₉Cl₁₀, LiPF₆, LiCF₃SO₃, LiCF₃CO₂, LiAsF₆, LiSbF₆, LiAlCl₄, CH₃SO₃Li, (CF₃SO₂)₂NLi, and (FSO₂)₂NLi.

In addition, the non-aqueous organic solvent may comprise N-methyl-2-pyrrolidinone, ethylene carbonate, propylene carbonate, butylene carbonate, dimethyl carbonate, diethyl carbonate, γ-butyrolactone, 1,2-dimethyoxy ethane, tetrahydroxyfuran, 2-methyl tetrahydrofuran, dimethyl sulfoxide, 1,3-dioxolane, formamide, dimethylformamide, dioxolane, acetonitrile, nitromethane, methyl formate, methyl citrate, phosphoric acid triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Furthermore, an exemplary embodiment of the present disclosure provides the lithium secondary battery comprising a positive electrode, a negative electrode, and a separator interposed between the positive electrode and the negative electrode; and an electrolyte composition that comprises a non-aqueous organic solvent, a lithium salt, a primary additive comprising a compound represented by Formula 1 below; and an electrolyte composition including a secondary additive comprising a non-fluorine-based secondary additive including vinylene carbonate (VC) and/or vinyl ethylene carbonate (VEC), and a fluorine-based secondary additive including fluoroethylene carbonate (FEC).

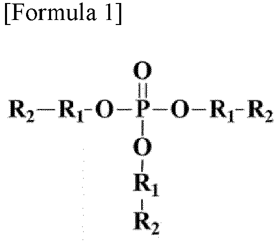

According to the Formula 1,
R₁is each independently a single bond, an alkylene group having 1 to 10 carbon atoms, or 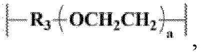
R₂is each independently an acrylate group, or a methacrylate group,
R₃is an alkylene group having 1 to 4 carbon atoms, and
a is an integer of 1 to 10.

In this case, the positive electrode may comprise a positive electrode current collector and a positive electrode mixture layer that contains one or more of a lithium metal oxide represented by the following Formula 2 and Formula 3:

[Formula 2] Liₓ[Ni_{y}Co_{z}Mn_{w}M¹ᵥ]O₂

[Formula3] LiM²ₚMn₍₂₋ₚ₎O₄

In the Formulas 2 and 3,
M¹is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w and v respectively satisfy 1.0≤x≤1.30, 0.5≤y<1, 0<z≤0.3, 0<w≤0.3, and 0≤v≤0.1, wherein y+z+w+v=1,
M²is Ni, Co or Fe, and
p is 0.05≤p≤0.6.

Specifically, the lithium metal oxide comprises one or more selected from the group consisting of LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, LiNi_{0.7}Mn_{1.3}O₄, LiNi_{0.5}Mn_{1.5}O₄and LiNi_{0.3}Mn_{1.7}O₄.

In addition, the negative electrode may comprise a negative electrode current collector and a negative electrode mixture layer containing the negative electrode active material including one or more selected from the group consisting of natural graphite, artificial graphite, expanded graphite, hard carbon, carbon black, acetylene black, and ketjen black.

In addition, the negative electrode active material of the negative electrode, besides carbon materials, may further include silicon material comprising one or more of silicon (Si), silicon carbide (SiC),and silicon oxide (SiO_{q}, 0.8≤q≤2.5).

In this case, the silicon material is comprised at 1 to 20 wt% with respect to the total weight of the negative electrode active material.

### [Advantageous Effects]

An electrolyte composition according to the present invention contains the primary additive represented by Formula 1, and specific amount of the secondary additive comprising one or more of the cyclic carbonate compounds as claimed, can not only reduce the generation of gas during a lithium secondary battery charge-discharge, but also improve storage characteristics and the lifespan characteristics under a high temperature condition by strengthening the SEI coating film on the surface of the electrode.

### [Detailed Description of the Embodiments]

The present disclosure can make various modifications and have various embodiments, thereby exemplary embodiments are illustrated in the drawings and described in detail in the detailed description.

However, the present disclosure may be embodied in many different forms, and should not be construed as being limited to the embodiments set forth herein.

According to the present disclosure, the terms "comprise," "include" and "have" used herein designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, according to the present disclosure, in the case of a part of a layer, a film, a region or a plate is disposed "on" another part, this includes not only a case in which one part is disposed "directly on" another part, but a case in which a third part is interposed therebetween. In contrast, when a part of a layer, a film, a region or a plate is disposed "under" another part, this includes not only a case in which one part is disposed "directly under" another part, but a case in which a third part is interposed therebetween. In addition, in this application, "on" may include not only a case of disposed on an upper part but also a case of disposed on a lower part.

In addition, according to the present disclosure, "included as a main component" may mean that a defined component is included at 50 wt% or more, 60 wt% or more, 70 wt% or more, 80 wt% or more, 90 wt% or more, or 95 wt% or more with respect to the total weight. For example, the "graphite is included as a main ingredient in a negative electrode active material" means that graphite is included at 50 wt% or more, 60 wt% or more, 70 wt% or more, 80 wt% or more, 90 wt% or more, or 95 wt% or more with respect to the total weight of the negative electrode active material, and in some cases, it means that a negative electrode active material totally consists of graphite, and thus includes 100 wt% of graphite.

Hereinafter, the present invention will be described in further detail.

### Electrolyte Composition

An exemplary embodiment of the present invention provides an electrolyte composition, which includes:
a non-aqueous organic solvent, a lithium salt, a primary additive comprising a compound represented by Formula 1 below; and a secondary additive comprising a non-fluorine-based secondary additive including vinylene carbonate (VC) and/or vinyl ethylene carbonate (VEC), and a fluorine-based secondary additive including fluoroethylene carbonate (FEC).

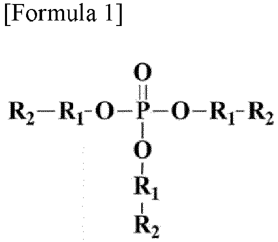

In the Formula 1,
R₁ is each independently a single bond, an alkylene group having 1 to 10 carbon atoms, or 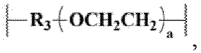
R₂ is each an acrylate group, or a methacrylate group,
R₃ is an alkylene group having 1 to 4 carbon atoms, and
a is an integer of 1 to 10.

The electrolyte composition according to the present invention, as a non-aqueous electrolyte composition containing a lithium salt, includes a primary additive represented by the Formula 1 and specific amount of secondary additive as claimed.

Here, the compound represented by the Formula 1 has a mother nucleus including a structure in which an acrylate group binds to two or more oxygen atoms in a phosphate via an saturated hydrocarbon chain and/or an alkylene glycol unit, an organic and/or inorganic coating film(s) may be uniformly formed on the surface of a positive electrode and/or a negative electrode in the activation of the secondary battery. Specifically, the compound represented by the Formula 1 is discomposed from a phosphate group to one or more *-R₁-R₂ group through a reaction with a lithium salt during charging and discharging of a secondary battery. The decomposed phosphate group and the *-R₁-R₂ group may react with non-aqueous solvents included in the electrolyte composition to unifirmly from organic and inorganic coating (e.g. phosphate-based coatings). The organic and inorganic coating may inhibit the generation of gas due to decomposition of an electrolyte and improve phenomena such as increased resistance of the battery and/or decreased capacity when the battery is exposed to a high temperature, so the performance and high-temperature safety of the battery may be more improved.

To this end, with regard to the compound represented by the Formula1,
R₁ may each be independently a single bond, an alkylene group having 1 to 4 carbon atoms, or 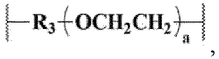
R₂ may each be independently an acrylate group, or a methacrylate group,
R₃may be an alkylene group having 1 to 3 carbon atoms, and
a may be an integer of 1 to5.

Specifically, R₁may each be independently a single bond, a methylene group, an ethylene group, a propylene group, or 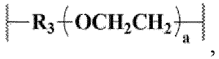
R₃ may be an ethylene group, and
a may be an integer of 1 to3.

For example, the compound represented by the Formula1 may contain any one or more of the compounds of Structural Formula 1 to Structural Formula 6 below:

| | | |
|---|---|---|
| Structural Formula 1 | Structural Formula 2 | Structural Formula 3 |
| 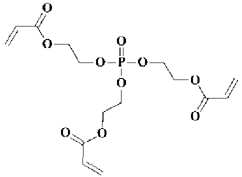 | 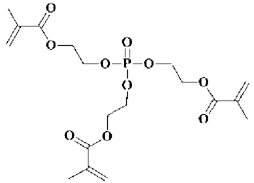 | 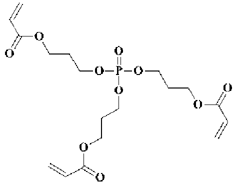 |
| Structural Formula 4 | Structural Formula 5 | Structural Formula 6 |
| 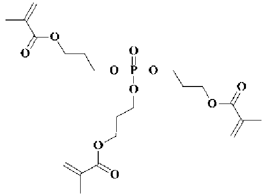 | 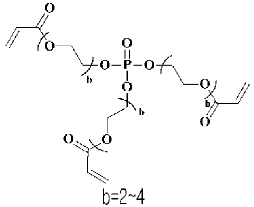 | 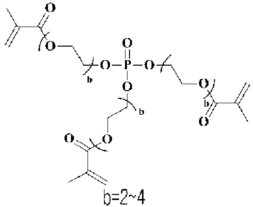 |
| Structural Formula 7 | Structural Formula 8 | |
| 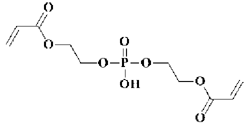 | 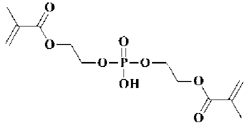 | |

The electrolyte composition according to the present invention contains a primary additive represented by Formula 1 and a secondary additive comprising a non-fluorine-based secondary additive including vinylene carbonate (VC) and/or vinyl ethylene carbonate (VEC), and a fluorine-based secondary additive including fluoroethylene carbonate (FEC).

The electrolyte composition can reduce the generation of gas during secondary battery charge-discharge by containing such additive, and it is possible to effectively prevent an increase in cell resistance and a decrease in capacity due to the elution of metal ions from an electrode, and the performance and high-temperature safety of the battery can be effectively improved.

The secondary additive comprises a non-fluorine-based additive including vinylene carbonate (VC), and/or vinylethylene carbonate (VEC), and a fluorine-based secondary additive including fluoroethylene carbonate (FEC).

The non-fluorine-based secondary additive participates in forming an organic film together with the primary additive including the compound represented by Formula 1 to induce uniformity of the film, thereby improving battery capacity. In addition, the fluorine-based secondary additive may act as a fluorine source when forming an organic and/or inorganic film to improve adhesion between lithium atoms and organic molecules in the film. As such, if the adhesion between lithium atoms and organic molecules in the film is improved, it is possible to prevent organic molecules from being detached from the negative electrode surface during charging and discharging of the secondary battery containing silicon as an anode active material, therefore an increase in resistance inside the battery and decomposition of the electrolyte due to desorbed organic molecules may be prevented. In addition, when the fluorine-based secondary additive is used in combination with the non-fluorine-based secondary additive, the ion conductivity in the battery can be further improved, so the effect of improving the charge/discharge cycle of the battery at room temperature is excellent.

In this case, the secondary additive may contain cyclic carbonate compounds in a certain ratio. Specifically, the secondary additive may include 50 to 200 parts by weight of the fluorine-based secondary additive with respect to 100 parts by weight of the non-fluorine-based secondary additive, and more specifically may include 50 to 150 parts by weight; 50 to 100 parts by weight; or 100 to 200 parts by weight in detail. In this case, the secondary additive may increase ionic conductivity during charging and discharging of the battery and at the same time, it may further improve the high-temperature safety of the battery.

In addition, the primary additive including the compound represented by the Formula 1 may be included at a certain content in the electrolyte composition. Specifically, the compound represented by the Formula 1 may be included at 0.01 to 5 wt%, and more specifically 0.05 to 3 wt%, 0.1 to 2.5 wt%, or 0.5 to1.5wt% with respect to the total weight of the electrolyte composition. When the primary additive is used in an excess amount outside the above range, the viscosity of the electrolyte composition is increased thereby deteriorating of the wettability of the electrode and separator, and the ionic conductivity of the electrolyte composition is reduced thereby resulting in poor battery performance such as a decrease in the initial capacity of the battery. In addition, the present invention may prevent the effect of the additive from being insignificantly implemented by using the primary electrolyte additive at a trace amount outside the above range.

Furthermore, the secondary additive may be included at a certain content in the electrolyte composition in order to create a synergetic effect with the primary additive. Specifically, the secondary additive containing cyclic carbonate compounds may be included at 0.01 to 5 wt%, and more specifically 0.01 to 4.5wt%, 0.4 to 4.1 wt%, 0.1 to 2.5 wt%, 1 to 3 wt%, 1.5 to 4.5 wt%, 1.5 to 2.5 wt%, 3 to 4.5 wt%, 1.6 to 4.1 wt%, 0.5 to 2.0 wt%, 2.5 to 4.0 wt%, or 0.5 to1.5wt% with respect to the total weight of the electrolyte composition. The present invention, by controlling the secondary additive, may prevent the battery's initial resistance from being significantly increased due to using the secondary additive at an excess amount, and may prevent the effect of stability improvement in high temperature from being insignificantly implemented due to using the secondary additive at a trace amount.

Meanwhile, the lithium salt used in the electrolyte composition may be applied without particular limitation as long as it is used in anon-aqueous electrolyte in the art. Specifically, the lithium salt may include one or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, and (FSO₂)₂NLi.

The concentration of the lithium salt is not particularly limited, but the lower limit of the appropriate concentration range is 0.5 mol/L or more, specifically 0.7 mol/L or more, and more specifically 0.9 mol/L or more, and the upper limit of the appropriate concentration range is 2.5 mol/L or less, specifically 2.0 mol/L or less, and more specifically 1.5 mol/L or less. When the concentration of the lithium salt is lower than 0.5 mol/L, there is a risk that ion conductivity is reduced, and the cycle characteristics and output characteristics of a non-aqueous electrolyte battery are lowered. In addition, when the concentration of the lithium salt exceeds 2.5 mol/L, the viscosity of an electrolyte for non-aqueous electrolyte battery increases, and thus there is a risk of decreasing ion conductivity and lowering the cycle characteristics and output characteristics of anon-aqueous electrolyte battery.

In addition, when a large amount of lithium salt is dissolved in a non-aqueous organic solvent at one time, the liquid temperature may increase because of the dissolution heat for the lithium salt. As described above, when the temperature of the non-aqueous organic solvent significantly increases due to the dissolution heat of the lithium salt, there is a risk that the decomposition may be accelerated to generate hydrogen fluoride (HF). Hydrogen fluoride (HF) is not preferable because it causes degraded battery performance. Therefore, a temperature at which the lithium salt is dissolved in a non-aqueous organic solvent may be adjusted to -20to 80°C, and specifically 0 to 60°C, but the present invention is not particularly limited thereto.

Furthermore, a non-aqueous organic solvent used in the electrolyte composition may be applied without particular limitation as long as it can be used in a non-aqueous electrolyte in the art. Specifically, examples of the non-aqueous organic solvents may include aprotic organic solvents such as N-methyl-2-pyrrolidinone, ethylene carbonate (EC), propylene carbonate, butylene carbonate, dimethyl carbonate, diethyl carbonate, γ-butyrolactone, 1,2-dimethyoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl citrate, phosphoric acid triester, trimethoxy methane, a dioxolane derivative, sulfolane, methylsulfolane, 1,3-diethyl-2-imidazolidinone, a propylene carbonate derivative, a tetrahydrofuranderivative, ether, methyl propionate, and ethyl propionate.

In addition, as a non-aqueous solvent used in the present invention, one type of the above examples may be used alone, or two or more types thereof may be used by mixing in any combination and ratio according to purpose. In terms of electrochemical stability against the oxidation/reduction of the solvent and chemical stability against heat or the reaction with a solute, among the above examples, particularly, propylene carbonate, ethylene carbonate, fluoroethylene carbonate, diethyl carbonate, dimethyl carbonate, or ethyl methyl carbonate is preferable.

Meanwhile, the electrolyte composition may further include an additive, other than the above-described basic components. An additive generally used in the non-aqueous electrolyte of the present invention may be added at any ratio. Specifically, the additive may be a compound having an overcharge prevention effect, a negative electrode coating film-forming effect, and a positive electrode protection effect, such as cyclohexylbenzene, biphenyl, t-butylbenzene, vinylene carbonate, vinyl ethylene carbonate, difluoroanisole, fluoroethylene carbonate, propane sultone, succinonitrile, or dimethylvinylene carbonate. In addition, in the case of use in a non-aqueous electrolyte battery called a lithium polymer battery, it is possible to use an electrolyte for a non-aqueous electrolyte battery after being pseudo-solidified by a gelling agent or cross-linked polymer.

### Lithium secondary battery

Further, in an exemplary embodiment, the present invention provides a lithium secondary battery, which includes:
a positive electrode, a negative electrode, and a separator interposed between the positive electrode and the negative electrode; and
an electrolyte composition comprising a non-aqueous organic solvent; a lithium salt; a primary additive containing a compound represented by Formula 1 below; and a secondary additive comprising a non-fluorine-based secondary additive including vinylene carbonate (VC) and/or vinyl ethylene carbonate (VEC), and a fluorine-based secondary additive including fluoroethylene carbonate (FEC):

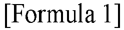

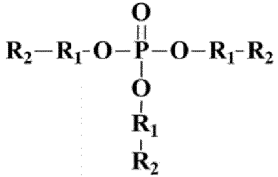

In the Formula 1,
R₁ is each independently a single bond, an alkylene group having 1 to 10 carbon atoms, or 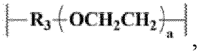
R₂ is each independently an acrylate group, or a methacrylate group,
R₃ is an alkylene group having 1 to 4 carbon atoms, and
a is an integer of 1 to 10.

The lithium secondary battery according to the present invention includes an electrode assembly including a positive electrode, a negative electrode, a separator interposed between the positive electrode and the negative electrode, and an electrolyte composition of the present invention. By including the electrolyte composition, not only the performance of the lithium secondary battery such as initial resistance and initial capacity becomes excellent, but also the battery performance and safety gets improved, especially when a positive electrode active material containing nickel and/or manganese at a high concentration is being used.

In this case, the positive electrode includes a positive electrode mixture layer formed by applying, drying, and pressing a positive electrode active material on a positive electrode current collector, and may selectively further include a conductive material, a binder, or other additives as needed.

Here, the positive electrode active material is a material that can cause an electrochemical reaction on the positive electrode current collector and may include one or more lithium metal oxides represented by the following Formula 2 and Formula 3, which enable the reversible intercalation and deintercalation of lithium ions:

[Formula 2] Liₓ[Ni_{y}Co_{z}Mn_{w}M¹ᵥ]O₂

[Formula3] LiM²ₚMn₍₂₋ₚ₎O₄

In the Formulas 2 and 3,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w and v respectively satisfy 1.0≤x≤1.30, 0.5≤y<1, 0<z≤0.3, 0<w≤0.3, and 0≤v≤0.1, wherein y+z+w+v=1,
M² is Ni, Co or Fe, and
p is 0.05≤p≤0.6

The lithium metal oxides represented by the Formula 2 and Formula 3 are materials respectively containing nickel (Ni) and manganese(Mn) at high contents, and have advantages of stably supplying high capacity and/or high voltage electricity when used as a positive electrode active material.

Here, examples of the lithium metal oxides represented by the Formula 2 may include LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, and LiNi_{0.7}Co_{0.1}Mn_{0.1}Al_{0.1}O₂, etc. and examples of the lithium metal oxides represented by the Formula 3 may include LiNi_{0.7}Mn_{1.3}O₄; LiNi_{0.5}Mn_{1.5}O₄; and LiNi_{0.3}Mn_{1.7}O₄, etc. and these oxides may be used alone or in combination.

In addition, in the positive electrode, as a positive electrode current collector, a material that does not cause a chemical change in the corresponding battery and having high conductivity may be used. For example, stainless steel, aluminum, nickel, titanium, calcined carbon, etc. may be used, and in the case of aluminum or stainless steel, one whose surface is treated with carbon, nickel, titanium or silver may also be used. In addition, the average thickness of the current collector may be suitably selected within 3 to 500 µm in consideration of the conductivity and total thickness of the positive electrode to be formed.

In addition, the negative electrode, like the positive electrode, includes a negative electrode mixture layer formed by applying, drying and pressing a negative electrode active material on a negative electrode current collector, and may selectively further include a conductive material, a binder, or other additives as needed.

The negative electrode active material may include a carbon material and a silicon material. Specifically, the carbon material refers to a material that has a carbon atom as the main component, and examples of the carbon materials may include one or more selected from the group consisting of natural graphite, artificial graphite, expanded graphite, hard carbon, carbon black, acetylene black, and Ketjen black. In addition, the silicon material refers to a material that has a silicon atom as the main component, and may include silicon (Si), silicon carbide (SiC), silicon monoxide (SiO) or silicon dioxide (SiO₂) alone or in combination. When, as the silicon (Si)-containing materials, silicon monoxide (SiO) and silicon dioxide (SiO₂) are uniformly mixed or combined to be included in the negative electrode mixture layer, these materials may be represented as a silicon oxide (SiO_{q}, 0.8≤q≤2.5).The silicon material has excellent compatibility with the first additive contained in the electrolyte composition, so that when used in combination with a carbon material as an anode active material, not only the durability of the battery is excellent, but also the cycle characteristics of the battery is improved in comparison to using the carbon material alone.

In addition, the silicon material may be included at 1 to 20 wt%, and specifically, 3 to 10 wt%, 8 to 15 wt%, 13 to 18 wt%, or 2 to 8 wt% with respect to the total weight of the negative electrode active material. The present invention may maximize the energy density of the battery by controlling the content of the silicon material in the above content range.

In addition, the negative electrode current collector is not particularly limited as long as it has high conductivity without causing a chemical change in the battery, and for example, copper, stainless steel, nickel, titanium or calcined carbon, etc. may be used, and in the case of copper or stainless steel, one whose surface is treated with carbon, nickel, titanium or silver, etc. may be used. Furthermore, the average thickness of the negative electrode current collector may be suitably selected within 1 to 500 µm in consideration of the conductivity and the total thickness of the negative electrode to be formed.

Meanwhile, the separator interposed between the positive electrode and the negative electrode of each unit cell is an insulating thin film having high ion permeability and high mechanical strength, and is not particularly limited as long as it is one that is commonly used in the art. Specifically, the separator may include one or more polymers selected from chemical-resistant and hydrophobic polypropylene, polyethylene and a polyethylene-propylene copolymer. The separator may have the form of a porous polymer substrate, such as a sheet or non-woven fabric including the above-described polymer, and in some cases, have the form of a composite separator in which organic or inorganic particles on the porous polymer substrate are coated with an organic binder. In addition, the separator may have an average pore diameter of 0.01 to 10 µm, and an average thickness of 5 to 300 µm.

Further, the secondary battery as an electrolyte includes the above-described non-aqueous electrolyte composition according to the present invention.

The electrolyte composition includes a primary additive containing compound represented by Formula1 below; and a secondary additive comprising a non-fluorine-based secondary additive including vinylene carbonate (VC) and/or vinyl ethylene carbonate (VEC), and a fluorine-based secondary additive including fluoroethylene carbonate (FEC).

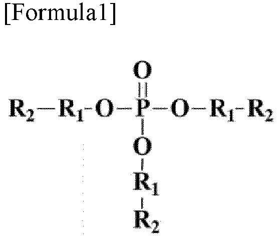

In the Formula 1,
R₁ is each independently a single bond, an alkylene group having 1 to 10 carbon atoms, or 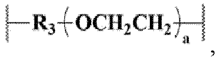
R₂ is each independently an acrylate group or a methacrylate group,
R₃ is an alkylene group having 1 to 4 carbon atoms, and
a is an integer of 1 to 10.

As the compound represented by the Formula1 has a mother nucleus including a structure in which an acrylate group binds to two or more oxygen atoms in a phosphate via an saturated hydrocarbon chain and/or an alkylene glycol unit, an organic and/or inorganic coating film(s) may be uniformly formed on the surface of a positive electrode and/or a negative electrode in the activation of the secondary battery. Therefore, the electrolyte additive may inhibit the generation of gas due to decomposition of an electrolyte when the battery is exposed to a high temperature, and improve phenomena such as increased resistance of the battery and/or decreased capacity, so the performance and high-temperature safety of the battery may be more improved.

To this end, with regard to the compound represented by the Formula1,
R₁ may each be independently a single bond, an alkylene group having 1 to 4 carbon atoms, or 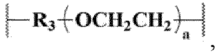
R₂ may each be independently an acrylate group, or a methacrylate group,
R₃ may be an alkylene group having 1 to 3 carbon atoms, and
a may be an integer of 1 to5.

Specifically, R₁ may each be independently a single bond, a methylene group, an ethylene group, a propylene group, or 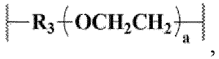
R₃ may be an ethylene group, and
a may be an integer of 1 to3.

In one example, the compound represented by the Formula 1 may be one or more compounds selected from Structural Formulas 1 to 6 below:

| | | |
|---|---|---|
| Structural Formula 1 | Structural Formula 2 | Structural Formula 3 |
| 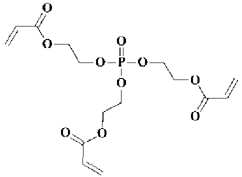 | 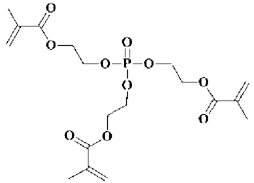 | 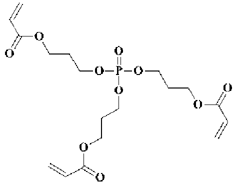 |
| Structural Formula 4 | Structural Formula 5 | Structural Formula 6 |
| 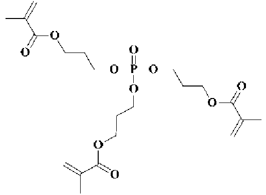 | 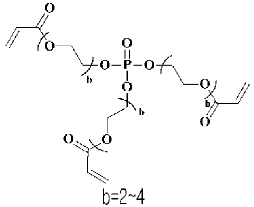 | 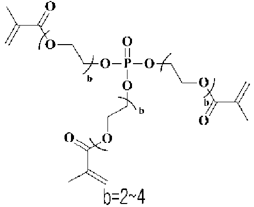 |
| Structural Formula 7 | Structural Formula 8 | |
| 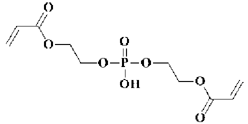 | 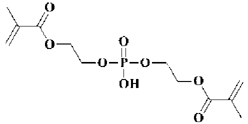 | |

The electrolyte composition according to the present invention contains a primary additive represented by Formula 1 and a secondary additive comprising a non-fluorine-based secondary additive including vinylene carbonate (VC) and/or vinyl ethylene carbonate (VEC), and a fluorine-based secondary additive including fluoroethylene carbonate (FEC).

The electrolyte composition can reduce the generation of gas during secondary battery charge-discharge by containing such additive, and it is possible to effectively prevent an increase in cell resistance and a decrease in capacity due to the elution of metal ions from an electrode, and the performance and high-temperature safety of the battery can be effectively improved.

The secondary additive contains a non-fluorine-based secondary additive including vinylene carbonate (VC) and/or vinyl ethylene carbonate (VEC), and a fluorine-based secondary additive including fluoroethylene carbonate (FEC).

The non-fluorine-based secondary additive participates in forming an organic film together with the primary additive including the compound represented by Formula 1 to induce uniformity of the film, thereby improving battery capacity. In addition, the fluorine-based secondary additive may act as a fluorine source when forming an organic and/or inorganic film to improve adhesion between lithium atoms and organic molecules in the film. As such, if the adhesion between lithium atoms and organic molecules in the film is improved, it is possible to prevent organic molecules from being detached from the negative electrode surface during charging and discharging of the secondary battery containing silicon as an anode active material, therefore an increase in resistance inside the battery and decomposition of the electrolyte due to desorbed organic molecules may be prevented. In addition, when the fluorine-based secondary additive is used in combination with the non-fluorine-based secondary additive, the ion conductivity in the battery can be further improved, so the effect of improving the charge/discharge cycle of the battery at room temperature is excellent.

The secondary additive may contain cyclic carbonate compounds in a certain ratio. Specifically, the secondary additive may include 50 to 200 parts by weight of the fluorine-based secondary additive with respect to 100 parts by weight of the non-fluorine-based secondary additive, and may include 50 to 150 parts by weight; 50 to 100 parts by weight; or 100 to 200 parts by weight of the non-fluorine-based secondary additive in detail. In this case, the secondary additive may increase ionic conductivity during charging and discharging of the battery and at the same time, it may further improve the high-temperature safety of the battery.

In addition, the primary additive comprising the compound represented by the Formula 1 may be included at a certain content in the electrolyte composition. Specifically, the compound represented by the Formula 1 may be included at 0.01 to 5 wt%, and more specifically 0.05 to 3 wt%, 0.1to 2.5 wt%, or 0.5 to1.5wt% with respect to the total weight of the electrolyte composition. The present invention may prevent an increase in viscosity of the electrolyte composition to prevent the wettability of an electrode and a separator from being degraded by using the primary additive at a high content that exceeds the above range. In addition, the present invention may prevent the effect of the additive from being insignificantly implemented by using the primary electrolyte additive at a trace amount outside the above range.

Furthermore, the secondary additive may be included at a certain content in the electrolyte composition in order to create a synergetic effect with the primary additive. Specifically, the secondary additive containing cyclic carbonates may be included at 0.01 to 5 wt%, and more specifically 0.01 to 4.5wt%, 0.4 to 4.1wt%, 0.1 to 2.5 wt%, 1 to 3 wt%, 1.5 to 4.5 wt%, 1.5 to 2.5 wt%, 3 to 4.5 wt%, 1.6 to 4.1 wt%, 0.5 to 2.0 wt%, 2.5 to 4.0 wt%, or 0.5 to1.5wt% with respect to the total weight of the electrolyte composition. The present invention may prevent the battery's initial resistance from being significantly increased due to using excess amount of the secondary additive by controlling the secondary additive at the above-described range, and may prevent the additive effect from being insignificantly implemented by using the secondary additive at a trace amount.

Meanwhile, the lithium salt used in the electrolyte composition may be applied without particular limitation as long as it is used in a non-aqueous electrolyte in the art. Specifically, the lithium salt may include one or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, and (FSO₂)₂NLi.

The concentration of the lithium salt is not particularly limited, but the lower limit of the appropriate concentration range is 0.5 mol/L or more, specifically 0.7 mol/L or more, and more specifically 0.9 mol/L or more, and the upper limit of the appropriate concentration range is 2.5 mol/L or less, specifically 2.0 mol/L or less, and more specifically 1.5 mol/L or less. When the concentration of the lithium salt is lower than 0.5 mol/L, there is a risk that ion conductivity is reduced, and the cycle characteristics and output characteristics of a non-aqueous electrolyte battery are lowered. In addition, when the concentration of the lithium salt exceeds 2.5 mol/L, the viscosity of an electrolyte for non-aqueous electrolyte battery increases, thereby there is a risk of decreasing ion conductivity and lowering the cycle characteristics and output characteristics of the non-aqueous electrolyte battery.

In addition, when a large amount of lithium salt is dissolved in a non-aqueous organic solvent at one time, the liquid temperature may increase because of the dissolution heat for the lithium salt. As described above, when the temperature of the non-aqueous organic solvent significantly increases due to the dissolution heat for the lithium salt, there is a risk that the decomposition may be accelerated to generate hydrogen fluoride (HF). Hydrogen fluoride (HF) is not preferable because it causes degraded battery performance. Therefore, a temperature at which the lithium salt is dissolved in the non-aqueous organic solvent may be adjusted to -20 to 80°C, and specifically 0 to 60°C, but the present invention is not particularly not limited thereto.

Furthermore, the non-aqueous organic solvent used in the electrolyte composition may be applied without particular limitation as long as it can be used in a non-aqueous electrolyte in the art. Specifically, examples of the non-aqueous organic solvents may include aprotic organic solvents such as N-methyl-2-pyrrolidinone, ethylene carbonate (EC), propylene carbonate, butylene carbonate, dimethyl carbonate, diethyl carbonate, γ-butyrolactone, 1,2-dimethyoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl citrate, phosphoric acid triester, trimethoxy methane, a dioxolane derivative, sulfolane, methylsulfolane, 1,3-diethyl-2-imidazolidinone, a propylene carbonate derivative, a tetrahydrofuran derivative, ether, methyl propionate, and ethyl propionate.

In addition, as a non-aqueous solvent used in the present invention, one type of the above examples may be used alone, or two or more types thereof may be used by mixing in any combination and ratio according to purpose. In terms of electrochemical stability against the oxidation/reduction of the solvent and chemical stability against heat or the reaction with a solute, among the above examples, particularly, propylene carbonate, ethylene carbonate, fluoroethylene carbonate, diethyl carbonate, dimethyl carbonate, or ethyl methyl carbonate is preferable.

Meanwhile, the electrolyte composition may further include an additive, other than the above-described basic components. Said additive generally used in the non-aqueous electrolyte of the present invention may be added at any ratio. Specifically, the additive may be a compound having an overcharge prevention effect, a negative electrode coating film-forming effect, and a positive electrode protection effect, such as cyclohexylbenzene, biphenyl, t-butylbenzene, vinylene carbonate, vinyl ethylene carbonate, difluoroanisole, fluoroethylene carbonate, propane sultone, succinonitrile, or dimethyl vinylene carbonate. In addition, in the case of use in a non-aqueous electrolyte battery called a lithium polymer battery, it is possible to use an electrolyte for a non-aqueous electrolyte battery after being pseudo-solidified by a gelling agent or a cross-linked polymer.

Hereinafter, the present invention will be described in further detail with reference to examples and an experimental example.

However, the following examples and an experimental example merely illustrate the present invention, and the content of the present invention is not limited to the following examples and an experimental example.

### Examples 1 to 12 and Comparative Examples 1 to 4. Preparation of electrolyte composition

1M LiPF₆ lithium salt was dissolved in a solvent in which ethylene carbonate (EC) and ethyl methyl carbonate (EMC) were mixed in a volume ratio of 3:7. Then, primary additives containing a compound represented by Structural Formula 4 and secondary additives that contain one or more of vinylene carbonate (VC), vinylethylene carbonate (VEC), and fluoroethylene carbonate (FEC)were dissolved to have a weight ratio shown in Table 1 below with respect to the total weight of the electrolyte, thereby preparing a non-aqueous electrolyte composition.

**[Table 1]**

| | Primary Additive Content | Secondary Additive | |
|---|---|---|---|
| | | Type | Content |
| Reference Example 1 | 1 wt% | VC | 0.5 wt% |
| Reference Example 2 | 1 wt% | VC | 2 wt% |
| Reference Example 3 | 1 wt% | VC | 4 wt% |
| Reference Example 4 | 1 wt% | VEC | 0.5 wt% |
| Reference Example 5 | 1 wt% | VEC | 2 wt% |
| Reference Example 6 | 1 wt% | VEC | 3 wt% |
| Reference Example 7 | 1 wt% | FEC | 0.5 wt% |
| Reference Example 8 | 1 wt% | FEC | 2 wt% |
| Reference Example 9 | 1 wt% | FEC | 4 wt% |
| Example 10 | 1 wt% | VC:FEC=1:0.8 (wt./wt.) | 4 wt% |
| Example 11 | 1 wt% | VC:FEC=1:3 (wt./wt.) | 4 wt% |
| Example 12 | 1 wt% | VC:VEC=1:0.8 (wt./wt.) | 4 wt% |
| Comparative Example 1 | - | - | - |
| Comparative Example 2 | 1 wt% | - | - |
| Comparative Example 3 | 5 wt% | - | - |
| Comparative Example 4 | - | VC | 4 wt% |

### Examples 13 to 24 and Comparative Examples5 to 8. Manufacture of lithium secondary battery

A positive electrode was manufactured by preparing LiNi_{0.8}Co_{0.1}Mn_{0.05}Al_{0.05}O₄ having a particle size of 5 µm as a positive electrode active material, preparing a slurry by mixing the positive electrode active material with a carbon-based conductive material and polyvinylidene fluoride as a binder in a weight ratio of 94:3:3 in N-methyl pyrrolidone (NMP), casting the slurry on an aluminum thin film, drying the slurry in a vacuum oven at 120°C, and rolling the resultant.

Separately, a negative electrode was manufactured by preparing a negative electrode active material using artificial graphite, preparing a slurry by mixing 97 parts by weight of the negative electrode active material and 3 parts by weight of styrene butadiene rubber (SBR) with water, casting the slurry on a copper thin film, drying the slurry in a vacuum oven at 130°C, and rolling the resultant.

A 2.1-Ah small pouch-type lithium secondary battery was manufactured by interposing a separator consisting of 18-µm polypropylene between the positive electrode and negative electrode obtained above, inserting the resultant into a case, and injecting the electrolyte composition (5 ml) prepared in each of the Examples 1 to 12 and Comparative Examples 1 to 4 as shown in Table 2 below.

**[Table 2]**

| | Type of electrolyte composition |
|---|---|
| Reference Example 13 | Electrolyte composition of Example 1 |
| Reference Example 14 | Electrolyte composition of Example 2 |
| Reference Example 15 | Electrolyte composition of Example 3 |
| Reference Example 16 | Electrolyte composition of Example 4 |
| Reference Example 17 | Electrolyte composition of Example 5 |
| Reference Example 18 | Electrolyte composition of Example 6 |
| Reference Example 19 | Electrolyte composition of Example 7 |
| Reference Example20 | Electrolyte composition of Example 8 |
| Reference Example21 | Electrolyte composition of Example 9 |
| Example22 | Electrolyte composition of Example 10 |
| Example23 | Electrolyte composition of Example 11 |
| Example 24 | Electrolyte composition of Example 12 |
| Comparative Example 5 | Electrolyte composition of Comparative Example 1 |
| Comparative Example 6 | Electrolyte composition of Comparative Example 2 |
| Comparative Example 7 | Electrolyte composition of Comparative Example 3 |
| Comparative Example 8 | Electrolyte composition of Comparative Example 4 |

### Experimental Example

The following experiment was performed to evaluate the performance of the lithium secondary battery according to the present invention.

### a) Initial capacity and resistance of secondary battery

While each of the secondary batteries manufactured in Examples 13 to 24 and Comparative Examples 5 to 8, the initial resistance and the capacity of the battery was observed.

Specifically, the activation charge/discharge of each secondary battery was performed twice at 0.2C/0.5C,and then a charging/discharging experiment was performed once with a standard charge/discharge current density of 0.5C/0.2C, a final charging voltage of 4.8V(Li/graphite), and a final discharging voltage of 3.0 V(Li/graphite), while measuring the charge/discharge capacity and the resistance of each secondary battery.

### b) Analysis of resistance increase rate and gas generation of secondary battery after high temperature storage

While each of the secondary batteries manufactured in Examples 13 to24 and Comparative Examples 5 to 8 was stored at 60°C for 8 weeks, the change in resistance and capacity of the battery was observed.

Specifically, the activation charge/discharge of each secondary battery was performed twice at 0.2C/0.5C,and then a charging/discharging experiment was each performed once with a standard charge/discharge current density of 0.5C/0.2C, a final charging voltage of 4.8V(Li/graphite), and a final discharging voltage of 3.0 V(Li/graphite).

Afterward, the resistance and capacity of the battery were measured at intervals of 2 weeks while the battery was fully charged at 4.2V of 0.33C and stored at a high temperature of 60°C. Here, after measuring the resistance and capacity of the battery, the battery was fully charged and stored. The amount of change based on the initial resistance and initial capacity of the battery was calculated from the measured resistance and capacity of the battery.

In addition, after the measurement of the resistance of the secondary battery is completed, the secondary battery is fixed in a chamber equipped with a pressure jig therein, the secondary battery is degassed by pressing the surface of the secondary battery, and then the amount of gas generation from the secondary battery during high-temperature storage was obtained by measuring the amount of degassing gas released into the chamber. The results are shown in Table 3 below.

**[Table 3]**

| | Initial Performance Evaluation | | High-temperature storage evaluation | |
|---|---|---|---|---|
| | Capacity [mAh/cm³] | Resistance [Ω/cm] | Increase Rate in Resistance [%] | Volume [mℓ] |
| *Example 13 | 2000.1 | 39.88 | 2.12 | 0.49 |
| *Example 14 | 1992.6 | 41.31 | 1.16 | 0.47 |
| *Example 15 | 1986.1 | 45.96 | 2.15 | 0.49 |
| *Example 16 | 1999.3 | 40.35 | 2.13 | 0.40 |
| *Example 17 | 1990.1 | 42.00 | 1.36 | 0.41 |
| *Example 18 | 1980.3 | 45.03 | 0.68 | 0.42 |
| *Example 19 | 2000.1 | 39.21 | 4.81 | 0.49 |
| *Example20 | 1996.5 | 39.96 | 3.69 | 0.46 |
| *Example 21 | 1994.2 | 40.35 | 3.01 | 0.48 |
| Example 22 | 1998.7 | 40.21 | 1.26 | 0.42 |
| Example 23 | 2001.5 | 39.15 | 1.86 | 0.46 |
| Example 24 | 1998.8 | 40.04 | 1.09 | 0.41 |
| Comparative Example 5 | 2011.9 | 36.90 | 7.02 | 0.63 |
| Comparative Example 6 | 2003.7 | 38.89 | 4.53 | 0.51 |
| Comparative Example 7 | 1950.1 | 50.36 | 1.86 | 0.50 |
| Comparative Example 8 | 1993.1 | 42.16 | 10.13 | 0.92 |

| | | | | |
|---|---|---|---|---|
| *Reference examples | | | | |

As shown in the Table 3, since the secondary batteries of Examples included an electrolyte composition including a primary additive containing compounds represented by Formula 1 and a secondary additive containing cyclic carbonates as claimed, it can be seen that they have excellent electrical performance and safety at a high temperature.

From the above results, as the electrolyte composition according to the present invention contains the primary additive represented by Formula 1 and specific amount of the secondary additive that contains one or more of the cyclic carbonates as claimed, can not only reduce the generation of gas during secondary battery charge-discharge, but also improve storage characteristics and the lifespan characteristics under a high temperature condition by strengthening the SEI coating film on the surface of the electrode.

Accordingly, the technical scope of the present invention is not limited to the content described in the detailed description of the specification, but should be defined by the claims.

## Claims

1. An electrolyte composition, comprising:
a non-aqueous organic solvent;
a lithium salt;
a primary additive comprising a compound represented by the following Formula 1; and
a secondary additive comprising a non-fluorine-based secondary additive including vinylene carbonate (VC) and/or vinyl ethylene carbonate (VEC), and a fluorine-based secondary additive including fluoroethylene carbonate (FEC): 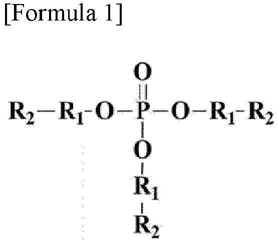
In the Formula 1,
R₁is each independently a single bond, an alkylene group having 1 to 10 carbon atoms, or 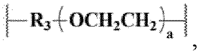
R₂ is each independently an acrylate group, or a methacrylate group,
R₃ is an alkylene group having 1 to 4 carbon atoms, and
a is an integer of 1 to 10.

2. The electrolyte composition of claim 1,
wherein R₁is each independently a single bond, a methylene group, an ethylene group, a propylene group, or 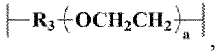
R₃ is an ethylene group, and
a is an integer of 1 to 5.

3. The electrolyte composition of claim 1,
wherein the compound represented by the Formula1 is any one or more of the compounds of Structural Formula 1 to Structural Formula 8 below:
| | | |
|---|---|---|
| Structural Formula 1 | Structural Formula 2 | Structural Formula 3 |
| 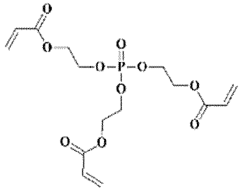 | 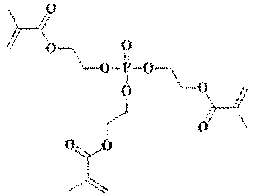 | 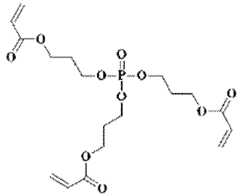 |
| Structural Formula 4 | Structural Formula 5 | Structural Formula 6 |
| 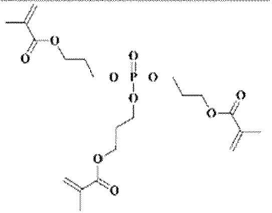 | 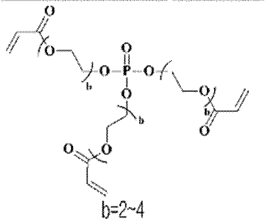 | 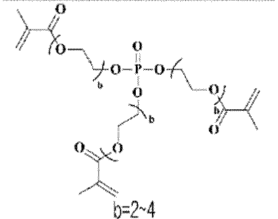 |

4. The electrolyte composition of claim 1,
wherein the primary additive is comprised at 0.01 to 5 wt% with respect to the total weight of the electrolyte composition.

5. The electrolyte composition of claim 1, wherein the secondary additive is comprised at 0.01 to 5 wt% with respect to the total weight of the electrolyte composition.

6. The electrolyte composition of claim 1,
wherein a lithium salt comprises one or more selected from the group consisting of LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, and (FSO₂)₂NLi.

7. The electrolyte composition of claim 1,
wherein a non-aqueous organic solvent comprises N-methyl-2-pyrrolidinone, ethylene carbonate, propylene carbonate, butylene carbonate, dimethyl carbonate, diethyl carbonate, γ-butyrolactone, 1,2-dimethyoxy ethane, tetrahydroxyfuran, 2-methyltetrahydrofuran, dimethyl sulfoxide, 1,3-dioxolane, formamide, dimethylformamide, dioxolane, acetonitrile, nitromethane, methyl formate, methyl citrate, phosphoric acid triester, trimethoxy methane, a dioxolane derivative, sulfolane, methylsulfolane, 1,3-dimethyl-2-imidazolidinone, a propylene carbonate derivative, a tetrahydrofuran derivative, ether, methyl propionate, and ethyl propionate.

8. A lithium secondary battery comprising:
a positive electrode;
a negative electrode;
a separator interposed between the positive electrode and the negative electrode; and
an electrolyte composition that comprises a non-aqueous organic solvent; a lithium salt; a primary additive comprising a compound represented by the following Formula 1; and a secondary additive comprising a non-fluorine-based secondary additive including vinylene carbonate (VC) and/or vinyl ethylene carbonate (VEC), and a fluorine-based secondary additive including fluoroethylene carbonate (FEC): 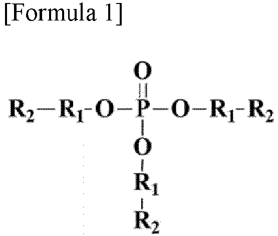
In the Formula 1,
R₁ is each independently a single bond, an alkylene group having 1 to 10 carbon atoms, or 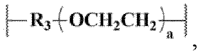
R₂ is each independently an acrylate group, or a methacrylate group,
R₃ is an alkylene group having 1 to 4 carbon atoms, and
a is an integer of 1 to 10.

9. The lithium secondary battery of claim 8,
wherein the positive electrode comprises a positive electrode current collector and a positive electrode mixture layer that contains one or more of a lithium metal oxide represented by the following Formula 2 and Formula 3:
[Formula 2] Liₓ[Ni_{y}Co_{z}Mn_{w}M¹ᵥ]O₂
[Formula3] LiM²ₚMn₍₂₋ₚ₎O₄
In the Formulas 2 and 3,
M¹is one or more elements selected from the group comprising W, Cu, Fe, V, Cr, Ti, Zr, Zn, Al, In, Ta, Y, La, Sr, Ga, Sc, Gd, Sm, Ca, Ce, Nb, Mg, B, and Mo,
x, y, z, w and v respectively satisfy 1.0≤x≤1.30, 0.5≤y<1, 0<z≤0.3, 0<w≤0.3, and 0≤v≤0.1, and y+z+w+v=1,
M²is Ni, Co or Fe, and
p is 0.05≤p≤0.6.

10. The lithium secondary battery of claim 9,
wherein the lithium metal oxide comprises one or more selected from the group comprising of LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, LiNi_{0.7}Co_{0.1}Mn_{0.1}Al_{0.1}O₂, LiNi_{0.7}Mn_{1.3}O₄, LiNi_{0.5}Mn_{1.5}O₄and LiNi_{0.3}Mn_{1.7}O₄.

11. The lithium secondary battery of claim 8,
wherein the negative electrode comprises a negative electrode current collector and a negative electrode mixture layer that contains a negative electrode active material including one or more carbon materials selected from the group comprising natural graphite, artificial graphite, expanded graphite, hard carbon, carbon black, acetylene black, and ketjen black.

12. The lithium secondary battery of claim 11,
wherein the negative electrode active material further comprises one or more silicon materials comprising silicon (Si), silicon carbide (SiC), and silicon oxide of SiO_{q}, 0.8≤q≤2.5.

13. The lithium secondary battery of claim 12,
wherein the silicon material is comprised at 1 to 20 wt% with respect to the total weight of the negative electrode active material.

## Patentansprüche

1. Elektrolytzusammensetzung, umfassend:
ein nichtwässriges organisches Lösungsmittel,
ein Lithiumsalz,
ein primäres Additiv, das eine durch die folgende Formel 1 dargestellte Verbindung umfasst, und
ein sekundäres Additiv, umfassend ein sekundäres Additiv auf Nichtfluorbasis, das Vinylencarbonat (VC) und/oder Vinylethylencarbonat (VEC) einschließt, und ein sekundäres Additiv auf Fluorbasis, das Fluorethylencarbonat (FEC) einschließt: 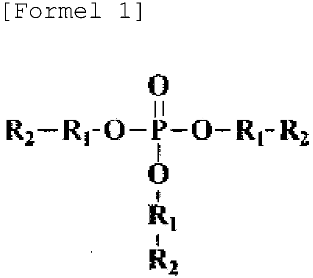
in der Formel 1
ist R₁ jeweils unabhängig eine Einfachbindung, eine Alkylengruppe mit 1 bis 10 Kohlenstoffatomen oder 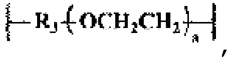
R₂ ist jeweils unabhängig eine Acrylatgruppe oder eine Methacrylatgruppe,
R₃ ist eine Alkylengruppe mit 1 bis 4 Kohlenstoffatomen und
a ist eine ganze Zahl von 1 bis 10.

2. Elektrolytzusammensetzung nach Anspruch 1,
wobei R₁ jeweils unabhängig eine Einfachbindung, eine Methylengruppe, eine Ethylengruppe, eine Propylengruppe oder 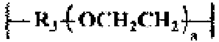 ist,
R₃ eine Ethylengruppe ist und
a eine ganze zahl von 1 bis 5 ist.

3. Elektrolytzusammensetzung nach Anspruch 1,
wobei die durch die Formel 1 dargestellte Verbindung eine oder mehrere der Verbindungen der nachstehenden Strukturformel 1 bis Strukturformel 8 ist:
| | | |
|---|---|---|
| Strukturformel 1 | Strukturformel 2 | Strukturformel 3 |
| 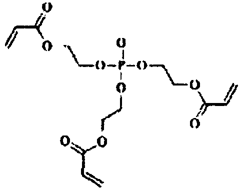 | 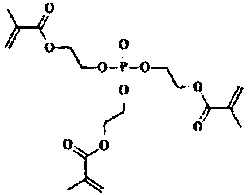 | 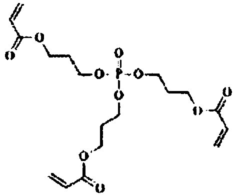 |
| Strukturformel 4 | Strukturformel 5 | Strukturformel 6 |
| 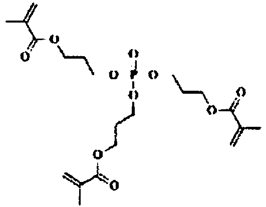 | 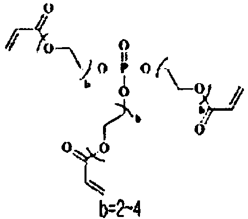 | 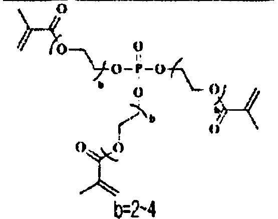 |

4. Elektrolytzusammensetzung nach Anspruch 1,
wobei das primäre Additiv zu 0,01 bis 5 Gew.-% in Bezug auf das Gesamtgewicht der Elektrolytzusammensetzung umfasst ist.

5. Elektrolytzusammensetzung nach Anspruch 1, wobei das sekundäre Additiv zu 0,01 bis 5 Gew.-% in Bezug auf das Gesamtgewicht der Elektrolytzusammensetzung umfasst ist.

6. Elektrolytzusammensetzung nach Anspruch 1,
wobei das Lithiumsalz eines oder mehrere, ausgewählt aus der Gruppe, bestehend aus LiCl, LiBr, LiI, LiClO₄, LiBf₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi und (FSO₂)₂NLi, umfasst.

7. Elektrolytzusammensetzung nach Anspruch 1,
wobei das nichtwässrige organische Lösungsmittel N-Methyl-2-pyrrolidinon, Ethylencarbonat, Propylencarbonat, Butylencarbonat, Dimethylcarbonat, Diethylcarbonat, γ-Butyrolacton, 1,2-Dimethyoxyethan, Tetrahydroxyfuran, 2-Methyltetrahydrofuran, Dimethylsulfoxid, 1,3-Dioxolan, Formamid, Dimethylformamid, Dioxolan, Acetonitril, Nitromethan, Methylformiat, Methylcitrat, Phosphorsäuretriester, Trimethoxymethan, ein Dioxolanderivat, Sulfolan, Methylsulfolan, 1,3-Dimethyl-2-imidazolidinon, ein Propylencarbonatderivat, ein Tetrahydrofuranderivat, Ether, Methylpropionat und Ethylpropionat umfasst.

8. Lithiumsekundärbatterie, umfassend:
eine positive Elektrode,
eine negative Elektrode,
einen Separator, der zwischen der positiven Elektrode und der negativen Elektrode eingefügt ist, und eine Elektrolytzusammensetzung, die ein nichtwässriges organisches Lösungsmittel, ein Lithiumsalz, ein primäres Additiv, umfassend eine durch die folgende Formel 1 dargestellte Verbindung, und ein sekundäres Additiv, umfassend ein sekundäres Additiv auf Nichtfluorbasis, das Vinylencarbonat (VC) und/oder Vinylethylencarbonat (VEC) einschließt, und ein sekundäres Additiv auf Fluorbasis, das Fluorethylencarbonat (FEC) einschließt,: 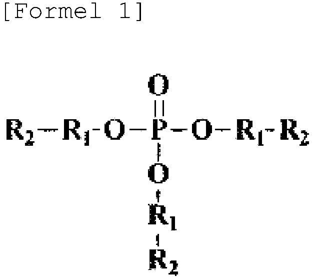
in der Formel 1
ist R₁ jeweils unabhängig eine Einfachbindung, eine Alkylengruppe mit 1 bis 10 Kohlenstoffatomen oder 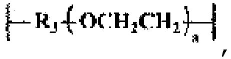
R₂ ist jeweils unabhängig eine Acrylatgruppe oder eine Methacrylatgruppe,
R₃ ist eine Alkylengruppe mit 1 bis 4 Kohlenstoffatomen und
a ist eine ganze Zahl von 1 bis 10.

9. Lithiumsekundärbatterie nach Anspruch 8,
wobei die positive Elektrode einen Stromkollektor für eine positive Elektrode und eine Mischschicht für eine positive Elektrode umfasst, die ein oder mehrere von einem durch die folgende Formel 2 und Formel 3 dargestellten Lithiummetalloxid enthält:
[Formel 2] Liₓ[Ni_{y}CO_{z}Mn_{w}M¹ᵥ]O₂
[Formel 3] LiM²ₚMn₍₂₋ₚ₎O₄
in den Formeln 2 und 3
ist M¹ ein oder mehrere Elemente, ausgewählt aus der Gruppe, umfassend W, Cu, Fe, V, Cr, Ti, Zr, Zn, Al, In, Ta, Y, La, Sr, Ga, Sc, Gd, Sm, Ca, Ce, Nb, Mg, B und Mo, x, a, z, w bzw. v erfüllen 1,0≤x≤1,30, 0,5≤y<1, 0<z≤0,3, 0<w≤0,3 und 0≤v≤0,1 und y+z+w+v=1
M² ist Ni, Co oder Fe und
p ist 0,05≤p≤0,6.

10. Lithiumsekundärbatterie nach Anspruch 9,
wobei das Lithiummetalloxid eines oder mehrere, ausgewählt aus der Gruppe, umfassend LiNi_{0,8}Co_{0,1}Mn_{0,1}O₂, LiNi_{0,6}Co_{0,2}Mn_{0,2}O₂, LiNi_{0,9}Co_{0,05}Mn_{0,05}O₂, LiNi_{0,6}Co_{0,2}Mn_{0,1}Al_{0,1}O₂, LiNi_{0,6}Co_{0,2}Mn_{0,15}Al_{0,05}O₂, LiNi_{0,7}Co_{0,1}Mn_{0,1}Al_{0,1}O₂, LiNi_{0,7}Mn_{1,3}O₄, LiNi_{0,5}Mn_{1,5}O₄ und LiNi_{0,3}Mn_{1,7}O₄, umfasst.

11. Lithiumsekundärbatterie nach Anspruch 8,
wobei die negative Elektrode einen Stromkollektor für eine negative Elektrode und eine Mischschicht für eine negative Elektrode umfasst, die ein Aktivmaterial für eine negative Elektrode enthält, das ein oder mehrere Kohlenstoffmaterialien, ausgewählt aus der Gruppe, umfassend natürlichen Graphit, künstlichen Graphit, expandierten Graphit, Hartkohlenstoff, Ruß, Acetylenruß und Ketjenruß, einschließt.

12. Lithiumsekundärbatterie nach Anspruch 11,
wobei das Aktivmaterial für eine negative Elektrode ferner ein oder mehrere Siliciummaterialien, umfassend Silicium (Si), Siliciumcarbid (SiC) und Siliciumoxid aus SiO_{q}, 0,8≤q≤2,5, umfasst.

13. Lithiumsekundärbatterie nach Anspruch 12,
wobei das Siliciummaterial zu 1 bis 20 Gew.-% in Bezug auf das Gesamtgewicht des Aktivmaterials für eine negative Elektrode umfasst ist.

## Revendications

1. Composition d'électrolyte, comprenant :
un solvant organique non aqueux ;
un sel de lithium ;
un additif primaire comprenant un composé représenté par la Formule 1 suivante ; et
un additif secondaire comprenant un additif secondaire non à base de fluor incluant le carbonate de vinylène (VC) et/ou le carbonate d'éthylène vinylique (VEC) et un additif secondaire à base de fluor incluant le carbonate de fluoroéthylène (FEC) : 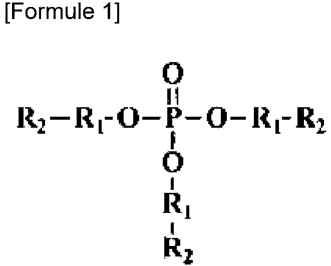
dans la Formule 1,
R₁ est chacun indépendamment une liaison simple, un groupe alkylène présentant 1 à 10 atomes de carbone ou 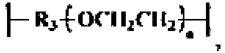
R₂ est chacun indépendamment un groupe acrylate ou un groupe méthacrylate,
R₃ est un groupe alkylène présentant 1 à 4 atomes de carbone, et
a est un nombre entier de 1 à 10.

2. Composition d'électrolyte selon la revendication 1,
dans laquelle R₁ est chacun indépendamment une liaison simple, un groupe méthylène, un groupe éthylène, un groupe propylène ou 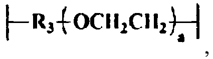
R₃ est un groupe éthylène, et
a est un nombre entier de 1 à 5.

3. Composition d'électrolyte selon la revendication 1,
dans laquelle le composé représenté par la Formule 1 est l'un quelconque ou plusieurs parmi les composés de la Formule structurelle 1 à la Formule structurelle 8 ci-dessous :
| | | |
|---|---|---|
| Formule structurelle 1 | Formule structurelle 2 | Formule structurelle 3 |
| 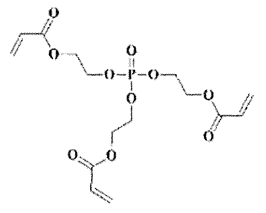 | 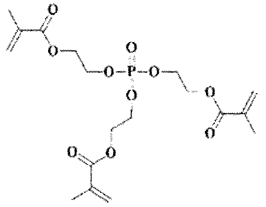 | 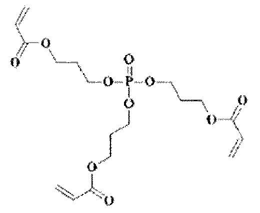 |
| Formule structurelle 4 | Formule structurelle 5 | Formule structurelle 6 |
| 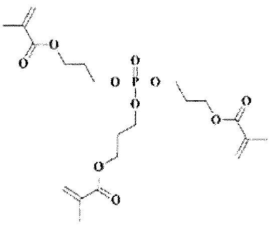 | 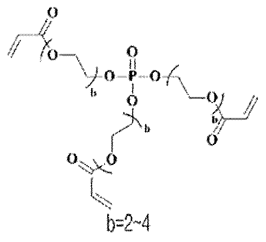 | 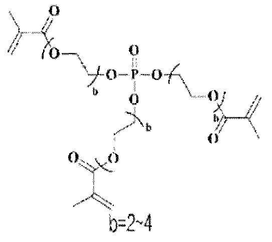 |

4. Composition d'électrolyte selon la revendication 1,
dans laquelle l'additif primaire est compris entre 0,01 et 5 % en poids par rapport au poids total de la composition d'électrolyte.

5. Composition d'électrolyte selon la revendication 1, dans laquelle l'additif secondaire est compris entre 0,01 et 5 % par rapport au poids total de la composition d'électrolyte.

6. Composition d'électrolyte selon la revendication 1,
dans laquelle un sel de lithium comprend un ou plusieurs sélectionnés parmi le groupe constitué de LiCl, LiBr, Lil, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi et (FSO₂)₂NLi.

7. Composition d'électrolyte selon la revendication 1,
dans laquelle un solvant organique non aqueux comprend la N-méthyl-2-pyrrolidinone, le carbonate d'éthylène, le carbonate de propylène, le carbonate de butylène, le carbonate de diméthyle, le carbonate de diéthyle, la y-butyrolactone, le 1,2-diméthoxy-éthane, le tétrahydrofurane, le 2-méthyltétrahydrofurane, le diméthylsulfoxide, le 1,3-dioxolane, le formamide, le diméthylformamide, le dioxolane, l'acétonitrile, le nitrométhane, le formiate de méthyle, le citrate de méthyle, le triester d'acide phosphorique, le triméthoxyméthane, un dérivé dioxolane, le sulfolane, le méthylsulfolane, la 1,3-diméthyl-2-imidazolidinone, un dérivé de carbonate de propylène, un dérivé de tétrahydrofurane, l'éther, le propionate de méthyle et le propionate d'éthyle.

8. Batterie secondaire au lithium comprenant :
une électrode positive ;
une électrode négative ;
un séparateur interposé entre l'électrode positive et l'électrode négative ;
et une composition d'électrolyte qui comprend le solvant organique non aqueux ; un sel de lithium ; un additif primaire comprenant un composé représenté par la Formule 1 suivante ; et un additif secondaire comprenant un additif secondaire à base de fluor incluant le carbonate de vinylène (VC) et/ou le carbonate d'éthylène vinylique (VEC) et un additif secondaire à base de fluor incluant le carbonate de fluoroéthylène (FEC) : 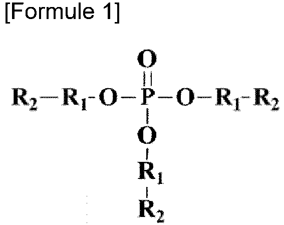
dans la Formule 1,
R₁ est chacun indépendamment une liaison simple, un groupe alkylène présentant 1 à 10 atomes de carbone, ou 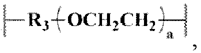
R₂ est chacun indépendamment un groupe acrylate ou un groupe méthacrylate,
R₃ est un groupe alkylène présentant 1 à 4 atomes de carbone, et
a est un nombre entier de 1 à 10.

9. Batterie secondaire au lithium selon la revendication 8,
dans laquelle l'électrode positive comprend un collecteur de courant d'électrode positive et une couche de mélange d'électrode positive qui contient un ou plusieurs parmi un oxyde de métal de lithium représenté par la Formule 2 et la Formule 3 suivantes :
[Formule 2] Liₓ[Ni_{y}Co_{z}Mn_{w}M¹ᵥ]O₂
[Formule 3] LiM²ₚMn₍₂₋ₚ₎O₄
dans les Formules 2 et 3,
M¹ est un ou plusieurs éléments sélectionnés parmi le groupe comprenant W, Cu, Fe, V, Cr, Ti, Zr, Zn, Al, In, Ta, Y, La, Sr, Ga, Sc, Gd, Sm, Ca, Ce, Nb, Mg, B, et Mo,
x, y, z, w et v satisfont respectivement 1,0 ≤ x ≤ 1,30, 0,5 ≤ y < 1, 0 < z ≤ 0,3, 0 < w ≤ 0,3 et 0 ≤ v ≤ 0,1 et y + z + w + v = 1,
M² est Ni, Co ou Fe et
p est 0,05 ≤ p ≤ 0,6.

10. Batterie secondaire au lithium selon la revendication 9,
dans laquelle l'oxyde de métal de lithium comprend un ou plusieurs sélectionnés parmi le groupe comprenant LiNi_{0,8}Co_{0,1}Mn_{0,1}O₂, LiNi_{0,6}Co_{0,2}Mn_{0,2}O₂, LiNi_{0,9}Co_{0,05}Mn_{0,05}O₂, LiNi_{0,6}Co_{0,2}Mn_{0,1}Al_{0,102}, LiNi_{0,6}Co_{0,2}Mn_{0,15}Al_{0,05}O₂, LiNi_{0,7}Co_{0,1}Mn_{0,1} Al_{0,1}O₂, LiNi_{0,7}Mn_{1,3}O₄, LiNi_{0,5}Mn_{1,5}O₄ et LiNi_{0.3}Mn_{1,7}O₄.

11. Batterie secondaire au lithium selon la revendication 8,
dans laquelle l'électrode négative comprend un collecteur de courant d'électrode négative et une couche de mélange d'électrode négative qui contient un matériau actif d'électrode négative incluant un ou plusieurs matériaux carbonés sélectionnés à partir du groupe comprenant le graphite naturel, le graphite artificiel, le graphite expansé, le carbone dur, le noir de carbone, le noir d'acétylène et le noir de ketjen.

12. Batterie secondaire au lithium selon la revendication 11,
dans laquelle le matériau actif d'électrode négative comprend en outre un ou plusieurs matériaux en silicium comprenant le silicium (si), le carbure de silicium (SiC) et l'oxyde de silicium de SiO_{q}, 0,8 ≤ q ≤ 2,5.

13. Batterie secondaire au lithium selon la revendication 12,
dans laquelle le matériau en silicium est compris à raison de 1 à 20 % en poids par rapport au poids total du matériau actif d'électrode négative.
